# EUROPEAN PATENT SPECIFICATION

(11) **EP 4 535 503 B1**
(45) Date of publication and mention of the grant of the patent: **13.05.2026**
(21) Application number: 24785401.1
(22) Date of filing: 25.03.2024
(51) Int. Cl.: H01M 10/42, B26D 1/08, H01M 50/403

(54) **MEMBRANE CUTTING DEVICE**
MEMBRANSCHNEIDVORRICHTUNG
DISPOSITIF DE COUPE À MEMBRANE

(30) Priority: 03.04.2023 KR 20230043618
(43) Date of publication of application: 09.04.2025
(73) Proprietor: LG Energy Solution, Ltd., Seoul 07335 (KR)
(72) Inventor: RYU, Hohyeon, Daejeon 34122 (KR); LEE, Hyunjun, Daejeon 34122 (KR); CHAE, Byung Joon, Daejeon 34122 (KR); HAN, Junghoon, Daejeon 34122 (KR)
(74) Representative: Goddar, Heinz J.
(86) International application number: PCT/KR2024/095632
(87) International publication number: WO 2024/210712

(56) References cited:
- CN-A- 115 107 108
- JP-B2- 6 029 824
- KR-A- 20230 000 625
- KR-A- 20230 018 564
- KR-B1- 101 813 249

## Description

### Technical Field

The present disclosure relates to a separator cutting apparatus for performing cutting of a separator for cross-sectional analysis of the separator in a short time and minimizing cross-section damage caused by cutting.

### Background Art

A separator used in an electrochemical device such as a secondary battery transmits ions while blocking flow of electrons between an anode and a cathode.

In other words, the separator is a thin film of insulating material, which plays a role in allowing only lithium ions to pass through micropores of 0.01 µm to 1 µm. The separator may be mainly manufactured from polyethylene (PE) and polypropylene (PP).

The separator may prevent short circuits by preventing direct contact between the anode and cathode, and allow lithium ions to move through micropores provided inside. At this time, when the lithium ions pass through the separator and move from the anode to the cathode, the secondary battery can be charged, and when they move from the cathode to the anode, the secondary battery can be discharged. In addition, when the temperature of a cell rises above a predetermined level, the micropores are blocked and the separator may prevent short circuits inside the secondary battery. The separator may be equipped with high mechanical strength and play a role in ensuring safety by blocking by-products or foreign substances generated inside.

As described above, in designing a separator to enable the separator to function, it may be important to observe the cross-section of the separator to understand its structure.

Specifically, the separator may be deformed by conditions such as pressure and temperature applied during a manufacturing process, use environment, etc. and in order to observe the degree of deformation at this time, it is required to cut the separator to form a cross-section to be observed.

However, production of the cross-section of the separator has been performed only with equipment requiring proficiency, such as low-temperature microtoming or ion milling.

For rapid observation and analysis, a technology is required that allows anyone to easily produce a cross-section of a separator with a simple operation.

### Disclosure of the Invention

### Technical Goals

The present disclosure relates to a separator cutting apparatus and an object of the present disclosure is to provide a separator cutting apparatus for performing cutting of a separator for cross-sectional analysis of the separator in a short time and minimizing cross-section damage caused by cutting.

Technical objects to be achieved by the present disclosure are not limited to the technical objects mentioned above, and other technical objects not mentioned will be clearly understood by those skilled in the art from the description below.

### Technical Solutions

A separator cutting apparatus of the present disclosure may include:
a sample seating jig having a separator seating surface parallel to a vertical direction;
a sample fixing jig which is closely fixed to the separator seating surface with a separator to be analyzed interposed therebetween;
a cooling water tank accommodating the sample seating jig inside;
a base plate having an upper surface on which the cooling water tank is mounted;
a pair of support pillars which have lower ends fixed to the upper surface of the base plate and are spaced apart from each other in a first direction perpendicular to the vertical direction;
a guide unit which is extended in the first direction and has both ends each of which is coupled to each of the pair of support pillars so as to be slidable in the vertical direction;
a moving unit coupled to the guide unit so as to be slidable in the first direction; and
a separator cutting blade mounted on a lower end of the moving unit,
wherein a blade insertion groove for inserting the separator cutting blade may be formed in the sample seating jig, and
the blade insertion groove may be formed in a shape traversing the separator seating surface in the vertical direction.

### Advantageous Effects

A separator cutting apparatus of the present disclosure may be capable of performing cutting of a separator for cross-sectional analysis of the separator in a short time and minimizing cross-section damage due to cutting.

The separator cutting apparatus of the present disclosure may allow anyone to easily produce a cross-section of the separator with a simple operation, enabling rapid observation and analysis of the separator.

### Brief Description of Drawings

FIG. 1 is a perspective view illustrating a separator cutting apparatus of the present disclosure.
FIG. 2 is a perspective view illustrating a state in which a sample seating jig and a sample fixing jig are coupled.
FIG. 3 is a cross-sectional view illustrating an A-A' cross-section of FIG. 2.
FIG. 4 is a plan view illustrating a side of the sample fixing jig.
FIG. 5 is a perspective view illustrating the sample seating jig.
FIG. 6a is a cross-sectional view illustrating a cooling water tank.
FIG. 6b is a plan view illustrating the cooling water tank.
FIG. 7 is a perspective view illustrating a base plate.
FIG. 8 is a front view illustrating a front of a separator cutting apparatus of the present disclosure.
FIG. 9 is a block diagram illustrating a separator cutting method of the present disclosure.
FIG. 10 is SEM images showing cross-sections of separators cut by microtoming and a separator cutting apparatus of the present disclosure.

### Best Mode for Carrying Out the Invention

A separator cutting apparatus of the present disclosure may include:
a sample seating jig having a separator seating surface parallel to a vertical direction;
a sample fixing jig which is closely fixed to the separator seating surface with a separator to be analyzed interposed therebetween;
a cooling water tank accommodating the sample seating jig inside;
a base plate having an upper surface on which the cooling water tank is mounted;
a pair of support pillars which have lower ends fixed to the upper surface of the base plate and are spaced apart from each other in a first direction perpendicular to the vertical direction;
a guide unit which is extended in the first direction and has both ends each of which is coupled to each of the pair of support pillars so as to be slidable in the vertical direction;
a moving unit coupled to the guide unit so as to be slidable in the first direction; and
a separator cutting blade mounted on a lower end of the moving unit,
wherein a blade insertion groove for inserting the separator cutting blade may be formed in the sample seating jig, and
the blade insertion groove may be formed in a shape traversing the separator seating surface in the vertical direction.

In the separator cutting apparatus of the present disclosure, when the first direction is a direction perpendicular to the separator seating surface, and a second direction is a direction perpendicular to the first direction and the vertical direction, a pair of the sample fixing jigs may be provided, and the pair of sample fixing jigs may be fixed in close contact with the separator seating surface while being spaced apart in the second direction with the blade insertion groove therebetween.

In the separator cutting apparatus of the present disclosure, the sample fixing jig may be in close contact with the sample seating jig by magnetic force.

In the separator cutting apparatus of the present disclosure, the first direction may be a direction perpendicular to the separator seating surface, the sample fixing jig may be provided in the form of a rod extending in the vertical direction, and an upper end of the sample fixing jig may be bent in the first direction.

In the separator cutting apparatus of the present disclosure, a jig alignment groove in which a lower end of the sample seating jig is seated may be formed in a bottom surface of the cooling water tank, and the lower end of the sample seating jig may be seated in the jig alignment groove and aligned in place.

In the separator cutting apparatus of the present disclosure, the sample seating jig may include a seating jig body member having one side formed as the separator seating surface and a plurality of magnet members embedded in the separator seating surface, and a lower end of the seating jig body member may be seated in the jig alignment groove.

In the separator cutting apparatus of the present disclosure, the cooling water tank may be filled with liquid nitrogen so that a part or the whole of the blade insertion groove is immersed, and the seating jig body member and the cooling water tank may be formed of the same material.

In the separator cutting apparatus of the present disclosure, a tank alignment groove in which a lower end of the cooling water tank is seated may be formed in the upper surface of the base plate.

In the separator cutting apparatus of the present disclosure, the guide unit may include a guide bar which extends in the first direction and to which the moving unit is coupled so as to be slidable in the first direction, and a pair of guide members fixed to both ends of the guide bar and coupled to the pair of support pillars, respectively, so as to be slidable in the vertical direction.

The separator cutting apparatus of the present disclosure may further include a pair of elastic springs, lower ends of which are supported on the upper surface of the base plate, upper ends of which are supported on the pair of guide members, respectively, and which is capable of being contracted or expanded in the vertical direction, and each of the pair of support pillars may be fitted into the center of each of the pair of elastic springs.

A separator cutting method using the separator cutting apparatus of the present disclosure may include:
a separator seating step of seating the separator to be analyzed on the separator seating surface to cover the blade insertion groove;
a separator fixing step of attaching the sample fixing jig to the separator seating surface with the separator to be analyzed in between;
a separator alignment step of inserting the lower end of the sample seating jig into the jig alignment groove to position the sample seating jig inside the cooling water tank;
an ethanol application step of applying ethanol to the separator to be analyzed;
a liquid nitrogen injection step of injecting liquid nitrogen into the cooling water tank;
a separator cutting step of lowering the moving unit and inserting the separator cutting blade into the blade insertion groove to cut the separator to be analyzed;
a jig ejection step of removing the sample seating jig from the cooling water tank; and
a separator separation step of separating the separator to be analyzed from the sample seating jig.

In the separator cutting method of the present disclosure, the sample seating jig may be provided with a handle member extending upward, and in the liquid nitrogen injection step, the liquid nitrogen may be injected into the cooling water tank so that a liquid level formed by the liquid nitrogen is located below an upper end of the handle member.

### Modes for Carrying Out the Invention

Hereinafter, embodiments according to the present disclosure will be described in detail with reference to the accompanying drawings. In this process, the size or shape of the components shown in the drawings may be exaggerated for clarity and convenience of explanation. In addition, terms specifically defined in consideration of the configuration and operation of the present disclosure may vary according to the intentions or customs of users and operators. Definitions of these terms should be made based on the content throughout this specification.

In the description of the present disclosure, it should be noted that an orientation or positional relationship indicated by the terms such as "center", "upper", "lower", "left", "right", "vertical", "horizontal", "inner side", "outer side", "one side", and "other side" is based on an orientation or positional relationship shown in a drawing or an orientation or positional relationship that is placed when using the product of the present disclosure on a daily basis, and is merely for explanation and brief description of the present disclosure, and it does not suggest or imply that the shown device or element must necessarily be configured or operated in a specified orientation and should not be construed as limiting the present disclosure.

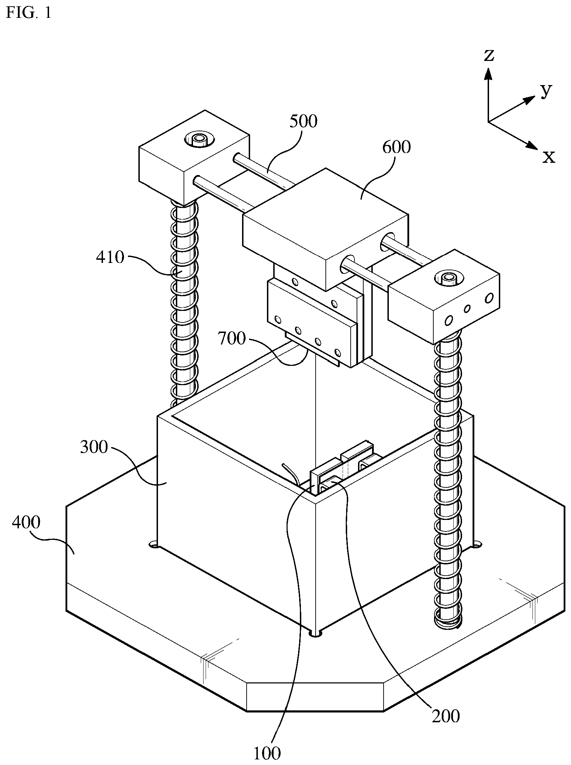

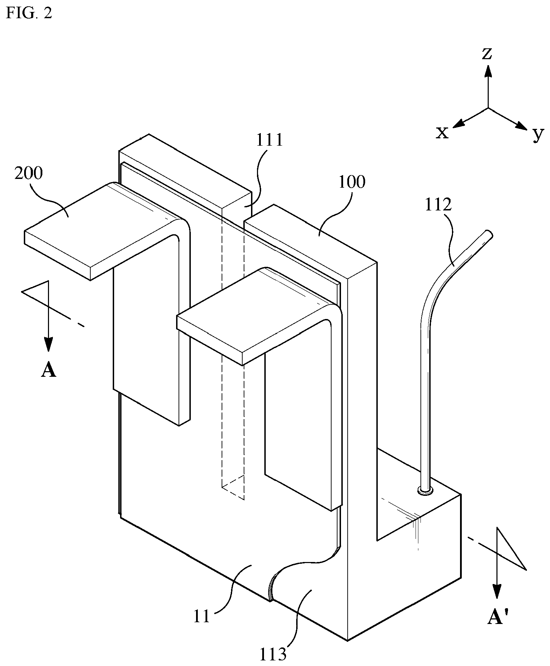

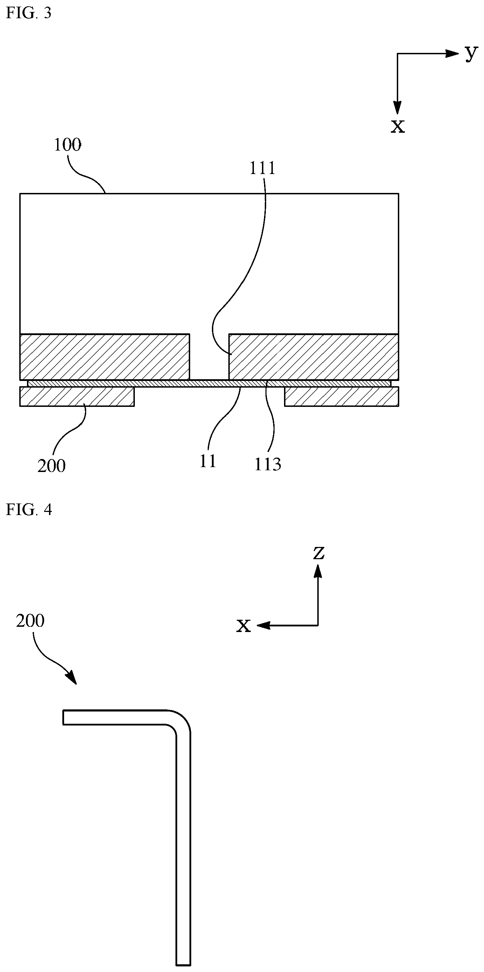

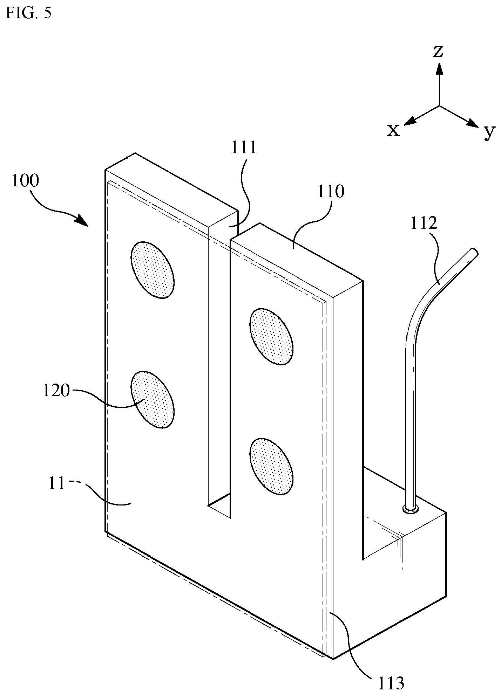

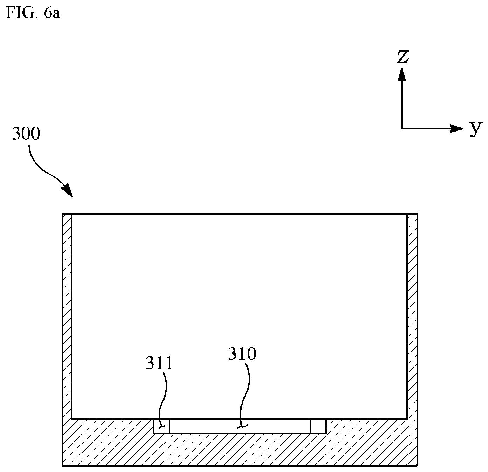

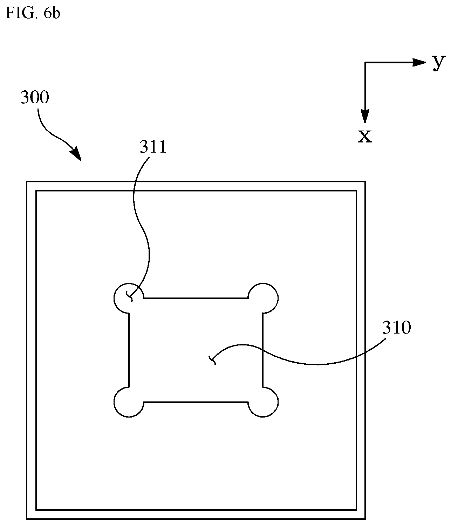

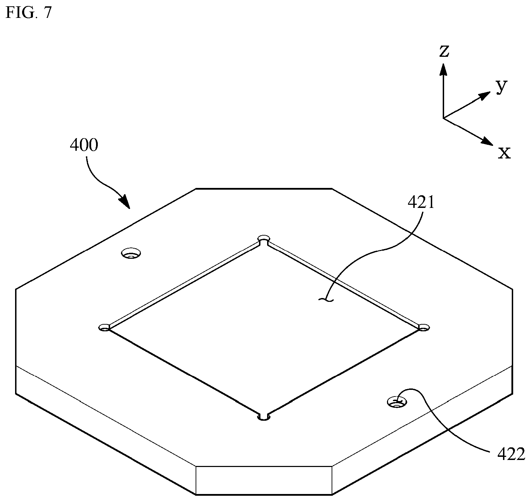

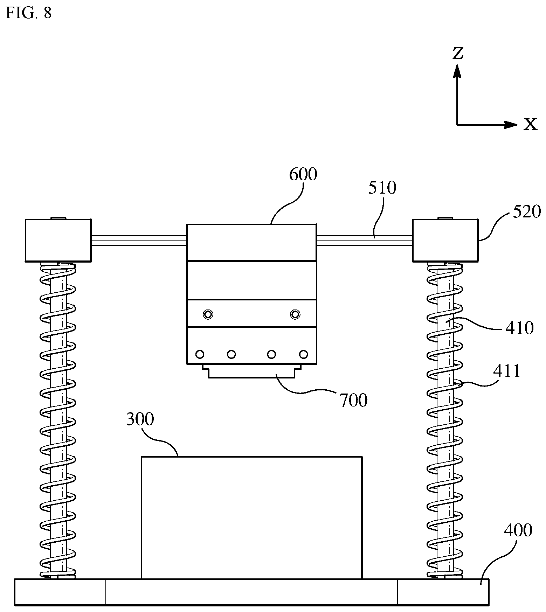

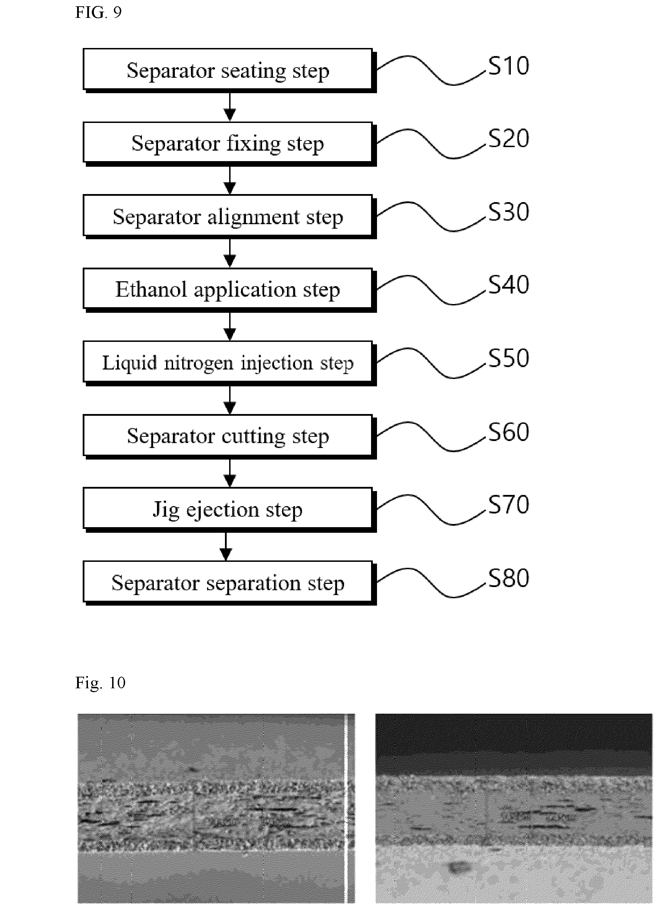

FIG. 1 is a perspective view illustrating a separator cutting apparatus of the present disclosure. FIG. 2 is a perspective view illustrating a state in which a sample seating jig 100 and a sample fixing jig 200 are coupled. FIG. 3 is a cross-sectional view illustrating an A-A' cross-section of FIG. 2. FIG. 4 is a plan view illustrating a side of the sample fixing jig 200. FIG. 5 is a perspective view illustrating the sample seating jig 100. FIG. 6a is a cross-sectional view illustrating a cooling water tank 300. FIG. 6b is a plan view illustrating the cooling water tank 300. FIG. 7 is a perspective view illustrating a base plate 400. FIG. 8 is a front view illustrating a front of the separator cutting apparatus of the present disclosure. FIG. 9 is a block diagram illustrating a separator cutting method of the present disclosure. FIG. 10 is SEM images showing cross-sections of separators cut by microtoming and the separator cutting apparatus of the present disclosure.

Hereinafter, referring to FIGS. 1 to 10, the separator cutting apparatus of the present disclosure will be described in detail. In FIGS. 1 to 8, a z-axis direction may be a vertical direction, an x-axis direction may be a first direction, and a y-axis direction may be a second direction. The vertical, first, and second directions may be orthogonal to each other.

The separator cutting apparatus of the present disclosure may be capable of producing a cut surface of a separator for cross-sectional observation in a short time and with uniform quality, regardless of an analyst's skill level.

The separator cutting apparatus of the present disclosure may be capable of producing a large amount of analysis samples in a short time.

As shown in FIGS. 1 and 2, the separator cutting apparatus of the present disclosure may include:
the sample seating jig 100 having a separator seating surface 113 parallel to the vertical direction;
the sample fixing jig 200 which is closely fixed to the separator seating surface with a separator 11 to be analyzed interposed therebetween;
the cooling water tank 300 accommodating the sample seating jig 100 inside;
the base plate 400 having an upper surface on which the cooling water tank 300 is mounted;
a pair of support pillars 410 which have lower ends fixed to the upper surface of the base plate 400 and are spaced apart from each other in the first direction perpendicular to the vertical direction;
a guide unit 500 which is extended in the first direction and has both ends each of which is coupled to each of the pair of support pillars 410 so as to be slidable in the vertical direction;
a moving unit 600 coupled to the guide unit 500 so as to be slidable in the first direction; and
a separator cutting blade 700 mounted on a lower end of the moving unit 600,
wherein a blade insertion groove 111 for inserting the separator cutting blade 700 may be formed in the sample seating jig 100, and
the blade insertion groove 111 may be formed in a shape traversing the separator seating surface 113 in the vertical direction.

The separator cutting apparatus of the present disclosure may cool the separator by immersing it in a refrigerant such as liquid nitrogen, and then cut the separator 11 to be analyzed with a blade to form a cross-section.

For the separator cutting apparatus of the present disclosure, the separator 11 to be analyzed, which is to be cut, may be, for example, a thin film of an insulating material and a film that allows only lithium ions to pass through fine holes of 0.01 µm to 1 µm, and may be made of polyethylene (PE), polypropylene (PP), and the like.

One side of the sample seating jig 100 may be formed as the separator seating surface 113, and the separator seating surface 113 may be formed as a plane perpendicular to the first direction. The blade insertion groove 111 may be formed in the separator seating surface 113 and prepared in a shape extending in the vertical direction. An upper end of the inner peripheral surface of the blade insertion groove 111 is open, so that the separator cutting blade 700 descending from above the sample seating jig 100 can be seated in the blade insertion groove 111 through the upper end of the blade insertion groove 111. The separator cutting blade 700 may be seated in the blade insertion groove 111 so that a part of it is located inside the blade insertion groove 111 and the remaining part protrudes outside an entrance of the blade insertion groove 111.

As shown in FIGS. 2 and 3, a pair of the sample fixing jigs 200 may be provided. The pair of sample fixing jigs 200 may be fixed in close contact with the separator seating surface 113 while being spaced apart in the second direction with the blade insertion groove 111 therebetween. One side of the separator 11 to be analyzed may be in close contact with the separator seating surface 113, and the other side may be in close contact with the sample fixing jig 200. In other words, the separator 11 to be analyzed may be sandwiched between the sample seating jig 100 and the sample fixing jig 200 to fix its position.

The length in the second direction of the sample fixing jig 200 may be less than half the length in the second direction of the sample seating jig 100.

Among surfaces of the sample fixing jig 200, a surface facing the separator seating surface 113 may be formed as a flat surface. The sample fixingjig 200 may be in close contact with the sample seating jig 100 by magnetic force. A material of the sample fixing jig 200 may be ferromagnetic.

As shown in FIG. 4, the sample fixing jig 200 may be provided in the form of a rod extending in the vertical direction, and an upper end of the sample fixing jig 200 may be bent in the first direction. For example, the sample fixing jig 200 may be provided as a square pillar extending in the vertical direction with a plane perpendicular to the first direction as its side surface, and an upper part may be bent in the first direction. The bent upper part of the sample fixing jig 200 may facilitate applying force when separating the sample fixing jig 200 from the sample seating jig 100.

As shown in FIG. 5, the sample seating jig 100 may include a seating jig body member 110 having one side formed as the separator seating surface 113 and a plurality of magnet members 120 embedded in the separator seating surface 113.

For example, the seating jig body member 110 may be provided in a pillar shape having a plane perpendicular to the first direction as the separator seating surface 113. An upper end of the seating jig body member 110 may be formed to be split by the blade insertion groove 111. A lower end of the seating jig body member 110 may be formed with a larger area than its upper part. A bottom surface of the seating jig body member 110 may be formed in a rectangular shape.

Grooves may be formed in the separator seating surface 113, and the plurality of magnet members 120 may be inserted and embedded into the grooves and coupled to the seating jig body member 110. For example, four magnet members 120 may be provided and placed two by two with the blade insertion groove 111 in between. The plurality of magnet members 120 may be arranged to be aligned in the vertical direction. Specifically, the plurality of magnet members 120 may be arranged on both sides of the blade insertion groove 111 to be aligned in the vertical direction.

The sample seating jig 100 may be provided with a handle member 112 extending upward. The handle member 112 may be fixedly coupled to the seating jig body member 110, and an upper end of the handle member 112 may be located higher than the upper end of the seating jig body member 110.

As shown in FIG. 6a, the cooling water tank 300 may be a water tank with an open top. For example, the cooling water tank 300 may be provided in a rectangular parallelepiped shape with an open top. A jig alignment groove 310 in which a lower end of the sample seating jig 100 is seated may be formed in a bottom surface of the cooling water tank 300 and the lower end of the sample seating jig 100 may be seated in the jig alignment groove 310 and aligned in place. Specifically, the lower end of the seating jig body member 110 may be seated in the jig alignment groove 310.

The cooling water tank 300 may be filled with liquid nitrogen so that a part or the whole of the blade insertion groove 111 is immersed, and the seating jig body member 110 and the cooling water tank 300 may be made of the same material. For example, the material of the cooling water tank 300 and the seating jig body member 110 may be Teflon material. Specifically, by setting thermal expansion rates of the seating jig body member 110 and the cooling water tank 300 to the same level, the seating jig body member 110 may be attached to or detached from the cooling water tank 300 regardless of temperature.

The shape of an entrance of the jig alignment groove 310 may be formed to correspond to the bottom surface of the seating jig body member 110 so that an inner peripheral surface of the jig alignment groove 310 can be brought into close contact with a side of the seating jig body member 110.

As shown in FIG. 6b, an extension groove 311 may be provided in the bottom surface of the cooling water tank 300. The extension groove 311 may be connected to the jig alignment groove 310. In the separator cutting apparatus of the present disclosure, the sample settling jig 100 may be coupled to or separated from the cooling water tank 300 while the cooling water tank 300 is filled with liquid nitrogen. The extension groove 311 may allow inflow or discharge of liquid nitrogen into the jig alignment groove 310 when attaching or detaching the sample seating jig 100 to prevent the attachment and detachment of the sample seating jig 100 from being interrupted due to pressure or volume of the liquid nitrogen.

As shown in FIG. 7, a tank alignment groove 421 in which a lower end of the cooling water tank 300 is seated may be formed in the upper surface of the base plate 400. In the base plate 400, the tank alignment groove 421 and pillar insertion grooves 422 in which the lower ends of the support pillars 410 are seated may be formed. For the separator cutting apparatus of the present disclosure, the sample seating jig 100 may be aligned in place by the jig alignment groove 310, and the cooling water tank 300 may be aligned in place by the tank alignment groove 421, so that the separator 11 to be analyzed may be aligned at a position where it can be cut with respect to the separator cutting blade 700.

As shown in FIG. 8, the guide unit 500 may include a guide bar 510 which extends in the first direction and to which the moving unit 600 is coupled so as to be slidable in the first direction, and a pair of guide members 520 fixed to both ends of the guide bar 510 and coupled to the pair of support pillars 410, respectively, so as to be slidable in the vertical direction.

The guide bar 510 may be provided in the form of a rod extending in the first direction. A penetrating hole penetrating the moving unit 600 in the first direction may be formed in the moving unit 600, and the guide bar 510 may be seated in the penetrating hole. At least two guide bars 510 may be provided to prevent the moving unit 600 from tilting.

The guide members 520 may be provided as a pair and fixedly coupled to both ends of the guide bar 510. The guide member 520 may be coupled to the support pillar 410 so that it can move linearly in the vertical direction.

The separator cutting apparatus of the present disclosure may further include a pair of elastic springs 411, lower ends of which are supported on the upper surface of the base plate 400, upper ends of which are supported on the pair of guide members 520, respectively, and which can be contracted or expanded in the vertical direction, and each of the pair of support pillars 410 may be fitted into the center of each of the pair of elastic springs 411. When an analyst pressurizes the moving unit 600 downward and cuts the separator 11 to be analyzed with the separator cutting blade 700, and the pressure exerted by the analyst on the moving unit 600 is relieved, the moving unit 600 may return to its original position by recovery force of the elastic spring 411.

The separator cutting blade 700 may be a blade that extends in the first direction. The blade of the separator cutting blade 700 may be formed to face downward, and an upper end of the separator cutting blade 700 may be fixed and coupled to the lower end of the moving unit 600.

The separator cutting apparatus of the present disclosure is capable of cutting the separator 11 to be analyzed in an ultra-low temperature atmosphere created by liquid nitrogen. At this time, the separator cutting blade 700 may be damaged even if it is used to cut the separator 11 to be analyzed only once. Reusing the damaged separator cutting blade 700 may reduce reproducibility of analysis experiments and cause errors in analysis results. The separator cutting apparatus of the present disclosure may cut the separator 11 to be analyzed with the separator cutting blade 700 and then move the separator cutting blade 700 in the first direction by a predetermined distance through the moving unit 600 to cut the separator 11 to be analyzed using an unused portion of the separator cutting blade 700.

In addition, the moving unit 600 may include a pair of moving members having planes perpendicular to the second direction, and the pair of moving members may be coupled with a bolt with the separator cutting blade 700 interposed therebetween. For the separator cutting apparatus of the present disclosure, the separator cutting blade 700 is a consumable item and must be replaced after being used a certain number of times. As described above, the separator cutting apparatus of the present disclosure may allow the separator cutting blade 700 to be easily replaced by fixing the separator cutting blade 700 to the moving unit 600 in a prefabricated manner rather than an adhesive type, and may easily maintain the same cutting conditions before and after replacement of the separator cutting blade 700.

As shown in FIG. 9, a separator cutting method of the present disclosure may include:
a separator seating step S10 of seating the separator 11 to be analyzed on the separator seating surface 113 to cover the blade insertion groove 111;
a separator fixing step S20 of attaching the sample fixing jig 200 to the separator seating surface 113 with the separator 11 to be analyzed in between;
a separator alignment step S30 of inserting the lower end of the sample seating jig 100 into the jig alignment groove 310 to position the sample seating jig 100 inside the cooling water tank 300;
an ethanol application step S40 of applying ethanol to the separator 11 to be analyzed;
a liquid nitrogen injection step S50 of injecting liquid nitrogen into the cooling water tank 300;
a separator cutting step S60 of lowering the moving unit 600 and inserting the separator cutting blade 700 into the blade insertion groove 111 to cut the separator 11 to be analyzed;
a jig ejection step S70 of removing the sample seating jig 100 from the cooling water tank 300; and
a separator separation step S80 of separating the separator 11 to be analyzed from the sample seating jig 100.

In the liquid nitrogen injection step, the liquid nitrogen may be injected into the cooling water tank 300 so that the liquid level formed by the liquid nitrogen is located below the upper end of the handle member 112.

FIG. 10 is SEM images showing a cross-section of a separator produced by microtoming used to manufacture a separator cross-section conventionally, and a cross-section of a separator manufactured with the separator cutting apparatus of the present disclosure. In FIG. 10, the image on the left is the cross-section of the separator produced by microtoming, and the image on the right is the cross-section of the separator manufactured with the separator cutting apparatus of the present disclosure. The separator cutting apparatus of the present disclosure may produce a separator cross-section in a short time, and it can be seen that the thickness of the produced separator is almost the same as the thickness of the separator produced by microtoming.

Although embodiments according to the present disclosure have been described above, they are merely illustrative and those skilled in the art will understand that various modifications and embodiments of equivalent range are possible therefrom. The scope of protection is defined by the appended claims.

[Explanation of Symbols] 11... Separator to be analyzed, 100... Sample seating jig, 110...Seating jig body member, 111...Blade insertion groove, 112... Handle member, 113... Separator seating surface, 120...Magnet member, 200...Sample fixing jig, 300...Cooling water tank, 310...Jig alignment groove, 311... Extension groove, 400...Base plate, 410... Support pillar, 411...Elastic spring, 421...Tank alignment groove, 422...Pillar insertion groove, 500...Guide unit, 510...Guide bar, 520...Guide member, 600... Moving unit, 700... Separator cutting blade

### Industrial Applicability

A separator cutting apparatus of the present disclosure may be capable of performing cutting of a separator for cross-sectional analysis of the separator in a short time and minimizing cross-section damage due to cutting.

The separator cutting apparatus of the present disclosure may allow anyone to easily produce a cross-section of the separator with a simple operation, enabling rapid observation and analysis of the separator.

## Claims

1. A separator cutting apparatus comprising:
a sample seating jig (100) having a separator seating surface (113) parallel to a vertical direction;
a sample fixing jig (200) which is closely fixed to the separator seating surface (113) with a separator to be analyzed (11) interposed therebetween;
a cooling water tank (300) accommodating the sample seating jig (100) inside;
a base plate (400) having an upper surface on which the cooling water tank is mounted;
a pair of support pillars (410) each having a lower end fixed to the upper surface of the base plate (400), wherein the pair of support pillars (400) are spaced apart from each other in a first direction perpendicular to the vertical direction;
a guide unit (500) extending in the first direction and comprising both ends each of which is coupled to each of the pair of support pillars (400) so the guide unit (500) is slidable in the vertical direction;
a moving unit (600) coupled to the guide unit (500) so as to be slidable in the first direction; and
a separator cutting blade (700) mounted on a lower end of the moving unit (600),
wherein a blade insertion groove (111) for inserting the separator cutting blade (700) is formed in the sample seating jig (100), and
the blade insertion groove (111) is formed in a shape traversing the separator seating surface (113) in the vertical direction.

2. The separator cutting apparatus of claim 1, wherein the first direction is a direction perpendicular to the separator seating surface, and
a second direction is a direction perpendicular to the first direction and the vertical direction, and
wherein a pair of the sample fixing jigs (200) are provided, and
the pair of sample fixing jigs (200) are fixed in close contact with the separator seating surface (113) while being spaced apart in the second direction with the blade insertion groove (111) therebetween.

3. The separator cutting apparatus of claim 1, wherein the sample fixing jig (200) is in close contact with the sample seating jig (100) by magnetic force.

4. The separator cutting apparatus of claim 2, wherein the sample fixing jig (200) is provided in the form of a rod extending in the vertical direction, and
an upper end of the sample fixing jig (200) is bent in the first direction.

5. The separator cutting apparatus of claim 1, wherein a bottom surface of the cooling water tank (300) comprises a jig alignment groove (310) in which a lower end of the sample seating jig (100) is seated, and
the lower end of the sample seating jig (100) is seated in the jig alignment groove (310) and aligned in place.

6. The separator cutting apparatus of claim 5, wherein the sample seating jig (100) comprises:
a seating jig body member (110) having one side formed as the separator seating surface (113); and
a plurality of magnet members (120) embedded in the separator seating surface (110), and
a lower end of the seating jig body member (110) is seated in the jig alignment grove (310).

7. The separator cutting apparatus of claim 6, wherein the cooling water tank (300) is filled with liquid nitrogen so that a part or the whole of the blade insertion groove (111) is immersed, and
the seating jig body member (110) and the cooling water tank (300) are formed of the same material.

8. The separator cutting apparatus of claim 5, wherein a tank alignment groove (421) in which a lower end of the cooling water tank (300) is seated is formed in the upper surface of the base (400).

9. The separator cutting apparatus of claim 1, wherein the guide unit (500) comprises:
a guide bar (510) which extends in the first direction and to which the moving unit (600) is coupled so as to be slidable in the first direction; and
a pair of guide members (520) fixed to both ends of the guide bar (510) and coupled to the pair of support pillars (410),
respectively, so as to be slidable in the vertical direction.

10. The separator cutting apparatus of claim 9 further comprising:
a pair of elastic springs (411), lower ends of which are supported on the upper surface of the base (400), upper ends of which are supported on the pair of guide members (520), respectively, and which is capable of being contracted or expanded in the vertical direction,
wherein each of the pair of support pillars (410) is fitted into the center of each of the pair of elastic springs (411).

11. A separator cutting method using the separator cutting apparatus of claim 5, comprising:
a separator seating step of seating the separator to be analyzed (11) on the separator seating surface (113) to cover the blade insertion groove (422);
a separator fixing step of attaching the sample fixing jig (200) to the separator seating surface (113) with the separator to be analyzed (11) in between;
a separator alignment step of inserting the lower end of the sample seating jig (200) into the jig alignment groove (422) to position the sample seating jig (200) inside the cooling water tank (300);
an ethanol application step of applying ethanol to the separator to be analized (11);
a liquid nitrogen injection step of injecting liquid nitrogen into the cooling water tank (300);
a separator cutting step of lowering the moving unit (600) and inserting the separator cutting blade (700) into the blade insertion groove (111) to cut the separator to be analized (11);
a jig ejection step of removing the sample seating jig (200) from the cooling water tank (300), and
a separator separation step of separating the separator to be analyzed (11) from the sample seating jig (200).

12. The separator cutting method of claim 11, wherein the sample seating jig (200) comprises a handle member (112) extending upward, and
in the liquid nitrogen injection step,
the liquid nitrogen is injected into the cooling water tank (300) so that a liquid level formed by the liquid nitrogen is located below an upper end of the handle member (112).

## Patentansprüche

1. Separator-Schneidvorrichtung aufweisend:
eine Probenaufnahmevorrichtung (100) mit einer Separator-Aufnahmefläche (113) parallel zu einer vertikalen Richtung;
eine Probenfixiervorrichtung (200), die eng an der Separator-Aufnahmefläche (113) fixiert ist, wobei ein zu analysierender Separator (11) dazwischen angeordnet ist;
einen Kühlwassertank (300), der die Probenaufnahmevorrichtung (100) im Inneren aufnimmt;
eine Basisplatte (400) mit einer oberen Fläche, auf der der Kühlwassertank montiert ist;
ein Paar von Stützsäulen (410), die jeweils ein unteres Ende aufweisen, das an der oberen Fläche der Basisplatte (400) fixiert ist, wobei das Paar von Stützsäulen (400) in einer ersten Richtung senkrecht zu der vertikalen Richtung voneinander beabstandet ist;
eine Führungseinheit (500), die sich in der ersten Richtung erstreckt und beide Enden aufweist, von denen jedes mit jeder des Paars von Stützsäulen (400) gekoppelt ist, so dass die Führungseinheit (500) in der vertikalen Richtung verschiebbar ist;
eine Bewegungseinheit (600), die mit der Führungseinheit (500) gekoppelt ist, um in der ersten Richtung verschiebbar zu sein; und
eine Separator-Schneidklinge (700), die an einem unteren Ende der Bewegungseinheit (600) montiert ist,
wobei eine Klingeneinsetznut (111) zum Einsetzen der Separator-Schneidklinge (700) in der Probenaufnahmevorrichtung (100) ausgebildet ist, und
die Klingeneinsetznut (111) in einer Form ausgebildet ist, die die Separator-Aufnahmefläche (113) in der vertikalen Richtung kreuzt.

2. Separator-Schneidvorrichtung nach Anspruch 1, wobei die erste Richtung eine Richtung senkrecht zu der Separator-Aufnahmefläche ist, und
eine zweite Richtung eine Richtung senkrecht zu der ersten Richtung und der vertikalen Richtung ist, und
wobei ein Paar der Probenfixiervorrichtungen (200) bereitgestelt ist, und
das Paar von Probenfixiervorrichtungen (200) in engem Kontakt mit der Separator-Aufnahmefläche (113) fixiert ist, während sie in der zweiten Richtung mit der Klingeneinsetznut (111) dazwischen beabstandet ist.

3. Separator-Schneidvorrichtung nach Anspruch 1, wobei die Probenfixiervorrichtung (200) durch Magnetkraft in engem Kontakt mit der Probenaufnahmevorrichtung (100) ist.

4. Separator-Schneidvorrichtung nach Anspruch 2, wobei die Probenfixiervorrichtung (200) in der Form einer Stange bereitgestellt ist, die sich in der vertikalen Richtung erstreckt, und
ein oberes Ende der Probenfixiervorrichtung (200) in der ersten Richtung gebogen ist.

5. Separator-Schneidvorrichtung nach Anspruch 1, wobei eine Bodenfläche des Kühlwassertanks (300) eine Vorrichtungsausrichtungsnut (310) aufweist, in der ein unteres Ende der Probenaufnahmevorrichtung lagert, und
das untere Ende der Probenaufnahmevorrichtung (100) in der Vorrichtungsausrichtungsnut (310) lagert und an Ort und Stelle ausgerichtet ist.

6. Separator-Schneidvorrichtung nach Anspruch 5, wobei die Probenaufnahmevorrichtung (100) aufweist:
ein Aufnahmevorrichtungs-Körperelement (110) mit einer Seite, die als die Separator-Aufnahmefläche (113) ausgebildet ist; und
mehrere Magnetelemente (120), die in der Separator-Aufnahmefläche (110) eingebettet sind, und
ein unteres Ende des Aufnahmevorrichtungs-Körperelements (110) in der Vorrichtungsausrichtungsnut (310) lagert.

7. Separator-Schneidvorrichtung nach Anspruch 6, wobei der Kühlwassertank (300) mit flüssigem Stickstoff gefüllt ist, so dass ein Teil oder die gesamte Klingeneinsetznut (111) eingetaucht ist, und
das Aufnahmevorrichtungs-Körperelement (110) und der Kühlwassertank (300) aus dem gleichen Material ausgebildet sind.

8. Separator-Schneidvorrichtung nach Anspruch 5, wobei eine Tankausrichtungsnut (421), in der ein unteres Ende des Kühlwassertanks (300) lagert, in der oberen Fläche der Basis (400) ausgebildet ist.

9. Separator-Schneidvorrichtung nach Anspruch 1, wobei die Führungseinheit (500) aufweist:
eine Führungsstange (510), die sich in der ersten Richtung erstreckt und mit der die Bewegungseinheit (600) gekoppelt ist, um in der ersten Richtung verschiebbar zu sein; und
ein Paar von Führungselementen (520), die jeweils an beiden Enden der Führungsstange (510) fixiert und mit dem Paar von Stützsäulen (410) gekoppelt sind, um in der vertikalen Richtung verschiebbar zu sein.

10. Separator-Schneidvorrichtung nach Anspruch 9, ferner aufweisend:
ein Paar von elastischen Federn (411), deren untere Enden auf der oberen Fläche der Basis (400) gestützt sind, deren obere Enden jeweils auf dem Paar von Führungselementen (520) gestützt sind, und die in der vertikalen Richtung zusammengezogen oder ausgedehnt werden kann,
wobei jede des Paars von Stützsäulen (410) in die Mitte jeder des Paars von elastischen Federn (411) eingepasst ist.

11. Separator-Schneidverfahren unter Verwendung der Separator-Schneidvorrichtung nach Anspruch 5, umfassend:
einen Separator-Aufnahmeschritt zum Aufnehmen des zu analysierenden Separators (11) auf der Separator-Aufnahmefläche (113), um die Klingeneinsetznut (422) abzudecken;
einen Separator-Fixierschritt zum Befestigen der Probenfixiervorrichtung (200) an der Separator-Aufnahmefläche (113) mit dem zu analysierenden Separator (11) dazwischen;
einen Separator-Ausrichtungsschritt zum Einsetzen des unteren Endes der Probenaufnahmevorrichtung (200) in die Vorrichtungsausrichtungsnut (422), um die Probenaufnahmevorrichtung (200) im Inneren des Kühlwassertanks (300) zu positionieren;
einen Ethanol-Aufbringungsschritt zum Aufbringen von Ethanol auf den zu analysierenden Separator (11);
einen Flüssigstickstoff-Injektionsschritt zum Injizieren von flüssigem Stickstoff in den Kühlwassertank (300);
einen Separator-Schneidschritt zum Absenken der Bewegungseinheit (600) und Einsetzen der Separator-Schneidklinge (700) in die Klingeneinsetznut (111), um den zu analysierenden Separator (11) zu schneiden;
einen Vorrichtungs-Auswurfschritt zum Entfernen der Probenaufnahmevorrichtung (200) aus dem Kühlwassertank (300); und
einen Separator-Trennschritt zum Trennen des zu analysierenden Separators (11) von der Probenaufnahmevorrichtung (200).

12. Separator-Schneidverfahren nach Anspruch 11, wobei die Probenaufnahmevorrichtung (200) ein Griffelement (112) aufweist, das sich nach oben erstreckt, und in dem Flüssigstickstoff-Injektionsschritt der flüssige Stickstoff in den Kühlwassertank (300) injiziert wird, so dass ein durch den flüssigen Stickstoff gebildeter Flüssigkeitspegel unterhalb eines oberen Endes des Griffelements (112) angeordnet ist.

## Revendications

1. Appareil de coupe de séparateur comprenant :
un gabarit de positionnement de l'échantillon (100) dont une surface de positionnement du séparateur (113) est parallèle à une direction verticale ;
un gabarit de fixation de l'échantillon (200) fixée près de la surface de positionnement du séparateur (113), avec un séparateur à analyser (11) intercalé entre eux ;
un réservoir d'eau de refroidissement (300) à l'intérieur duquel est installé le gabarit de positionnement de l'échantillon (100) ;
un socle (400) possédant une surface supérieure sur laquelle est monté le réservoir d'eau de refroidissement ;
une paire de montants de support (410) dote chacun d'une extrémité inférieure fixée sur la surface supérieure du socle (400),
les deux montants de support (400) étant espacés l'un de l'autre dans une première direction perpendiculaire à la direction verticale ;
un dispositif de guidage (500) s'étendant dans la première direction, et comprenant deux bouts, chacun desquels étant couplé à chacun de la paire de montants de support (400) de sorte que le dispositif de guidage (500) puisse coulisser dans la direction verticale ;
un dispositif de déplacement (600) couplé au dispositif de guidage (500) afin de pouvoir coulisser dans la direction verticale ; et
une lame de coupe du séparateur (700) montée sur une extrémité inférieure du dispositif de déplacement (600),
une cannelure d'insertion de lame (111) pour l'insertion de la lame de coupe du séparateur (700) étant formée dans le gabarit de positionnement de l'échantillon (100), et
la cannelure d'insertion de la lame (111) étant formée dans une forme parcourant la surface de positionnement du séparateur (113) dans la direction verticale.

2. Appareil de coupe de séparateur selon la revendication 1, la première direction étant une direction perpendiculaire à la surface de positionnement du séparateur, et
une deuxième direction étant une direction perpendiculaire à la première direction et à la direction verticale, et
une paire de gabarits de fixation de l'échantillon (200) étant pourvue, et
les deux gabarits de fixation de l'échantillon (200) étant fixés en contact étroit avec la surface de positionnement du séparateur (113), tout en étant espacés dans la deuxième direction avec la cannelure d'insertion de la lame (111) entre eux.

3. Appareil de coupe de séparateur selon la revendication 1, le gabarit de fixation de l'échantillon (200) étant maintenu en contact étroit avec le gabarit de positionnement de l'échantillon (100) par une force magnétique.

4. Appareil de coupe de séparateur selon la revendication 2, le gabarit de fixation de l'échantillon (200) se présentant sous forme d'une tige déployée dans la direction verticale, et une extrémité supérieure du gabarit de fixation de l'échantillon (200) étant pliée dans la première direction.

5. Appareil de coupe de séparateur selon la revendication 1, une surface inférieure du réservoir d'eau de refroidissement (300) comprenant une cannelure d'alignement du gabarit (310) dans laquelle une extrémité inférieure du gabarit de positionnement de l'échantillon (100) est installée, et
l'extrémité inférieure du gabarit de positionnement de l'échantillon (100) étant installée dans la cannelure d'alignement du gabarit (310), et alignée en place.

6. Appareil de coupe de séparateur selon la revendication 5, le gabarit de positionnement de l'échantillon (100) comprenant :
un élément du corps de gabarit de positionnement (110) dont un côté est formé en tant que surface de positionnement du séparateur (113) ;
et
une pluralité d'éléments d'aimant (120) encastrés dans la surface de positionnement du séparateur (110), et
une extrémité inférieure de l'élément du corps de gabarit de positionnement (110) étant positionnée dans la cannelure d'alignement du gabarit (310).

7. Appareil de coupe de séparateur selon la revendication 6, le réservoir d'eau de refroidissement (300) étant rempli avec de l'azote liquide de sorte qu'une partie ou l'ensemble de la cannelure d'insertion de la lame (111) soit immergé,
et
l'élément du corps de gabarit de positionnement (110) et le réservoir d'eau de refroidissement (300) étant réalisés avec le même matériau.

8. Appareil de coupe de séparateur selon la revendication 5, une cannelure d'alignement du réservoir (421) dans laquelle une extrémité inférieure du réservoir d'eau de refroidissement (300) est installée étant formée dans la surface supérieure du socle (400).

9. Appareil de coupe de séparateur selon la revendication 1, le dispositif de guidage (500) comprenant une barre de guidage (510) s'étendant dans la première direction, et à laquelle le dispositif de déplacement (600) est couplé de façon à pouvoir coulisser dans la première direction ; et
une paire d'éléments de guidage (520) fixés aux deux bouts de la barre de guidage (510) et couplés à la paire de montants de support (410), respectivement, de façon à pouvoir coulisser dans la direction verticale.

10. Appareil de coupe de séparateur selon la revendication 9, comprenant en outre :
une paire de ressorts élastiques (411), dont les extrémités inférieures sont supportées sur la surface supérieure du socle (400), et les extrémités supérieures sont supportées sur la paire d'éléments de guidage (520), respectivement, et
qui sont en mesure d'être contractés ou détendus dans la direction verticale,
chacun de la paire de montants de support (410) étant monté au centre de chacun de la paire de ressorts élastiques (411).

11. Procédé de coupe d'un séparateur utilisant l'appareil de coupe de séparateur selon la revendication 5, comprenant :
une étape de positionnement du séparateur comportant le positionnement du séparateur à analyser (11) sur la surface de positionnement du séparateur (113) pour couvrir la cannelure d'insertion de la lame (422) ;
une étape de fixation du séparateur comportant la fixation du gabarit de fixation de l'échantillon (200) sur la surface de positionnement du séparateur (113), le séparateur à analyser (11) étant intercalé entre eux ;
une étape d'alignement du séparateur comportant l'insertion de l'extrémité inférieure du gabarit de positionnement de l'échantillon (200) dans la cannelure d'insertion de la lame (422) afin de positionner le gabarit de positionnement de l'échantillon (200) à l'intérieur du réservoir d'eau de refroidissement (300) ;
une étape d'application d'éthanol comportant l'application d'éthanol sur le séparateur à analyser (11) ;
une étape d'injection d'azote liquide comportant l'injection d'azote liquide dans le réservoir d'eau de refroidissement (300) ;
une étape de coupe du séparateur comportant l'abaissement du dispositif de déplacement (600) et l'insertion de la lame de coupe du séparateur (700) dans la cannelure d'insertion de lame (111) pour couper le séparateur à analyser (11) ;
une étape d'éjection du gabarit comportant l'extraction du gabarit de positionnement de l'échantillon (200) du réservoir d'eau de refroidissement (300), et
une étape de séparation du séparateur comportant la séparation du séparateur à analyser (11) du gabarit de positionnement de l'échantillon (200).

12. Procédé de coupe d'un séparateur selon la revendication 11, le gabarit de positionnement de l'échantillon (200) comprenant un élément de poignée (112) s'étendant vers le haut et,
à l'étape d'injection d'azote liquide, l'azote liquide étant injecté dans le réservoir d'eau de refroidissement (300) afin qu'un niveau de liquide formé par l'azote liquide se situe sous une extrémité supérieure de l'élément de poignée (112).
